# EUROPEAN PATENT APPLICATION

(11) **EP 3 272 561 A1**
(43) Date of publication of application: **24.01.2018**
(21) Application number: 16764508.4
(22) Date of filing: 06.01.2016
(51) Int. Cl.: B60G 21/073, B60G 17/04, B60G 21/06, B60G 21/067, B62M 27/02, F16F 9/32

(54) **HYDRAULIC SHOCK ABSORBER DEVICE FOR VEHICLE**

(30) Priority: 19.03.2015 JP 2015056986
(71) Applicant: Yamaha Hatsudoki Kabushiki Kaisha, Iwata-shi, Shizuoka 438-8501 (JP)
(72) Inventor: SAWAI,Seiji, Iwata-shi Shizuoka 438-8501 (JP); YAMAZAKI,Yutaka, Iwata-shi Shizuoka 438-8501 (JP)
(74) Representative: Grünecker Patent- und Rechtsanwälte PartG mbB
(86) International application number: PCT/JP2016/050240
(87) International publication number: WO 2016/147677

(57) **Abstract**

A hydraulic shock absorbing apparatus for a vehicle includes a body left-side front wheel (7) (first traveling member) and a body right-side front wheel (8) (second traveling member), a left-side arm (11) (first connecting member) and a right-side arm (12) (second connecting member), and hydraulic shock absorbers (4, 5) provided between a vehicle body (3) and the left- and right-arms (11, 12). One end portion of each hydraulic shock absorber (4, 5) is formed by a cylinder main body (15) partitioned into a first oil chamber (21) and a second oil chamber (22) by a piston (23). The other end portion of the hydraulic shock absorber (4, 5) is formed by a piston rod (16) having the piston (23). The apparatus also includes a reserve tank (6) connected to one hydraulic shock absorber (4) via a first hydraulic oil passage (61) and connected to the other hydraulic shock absorber (5) via a second hydraulic oil passage (62). The first hydraulic oil passage (61) and the second hydraulic oil passage (62) are individually connected to a third oil chamber (57) of the reserve tank (6). It is possible to provide the hydraulic shock absorbing apparatus for the vehicle which can suppress a change in attitude of a vehicle body without increasing inclination of the vehicle body when the pair of hydraulic shock absorbers operate in the opposite directions while adopting an arrangement that can be readily manufactured.

## Description

### Technical Field

The present invention relates to a hydraulic shock absorbing apparatus for a vehicle, which suppresses a change in attitude of the vehicle using a pair of hydraulic shock absorbers.

### Background Art

In a vehicle such as a conventional automobile or snowmobile, the attitude of a vehicle body is desirably stable at the time of acceleration or deceleration or at the time of changing a traveling direction. At the time of acceleration or deceleration, so-called pitching occurs. At the time of changing the traveling direction, so-called rolling occurs. Pitching indicates a change in attitude in which the vehicle body inclines about an axis extending in a right-and-left direction and thus the front and rear portions of the vehicle body are displaced in vertically opposite directions. Rolling indicates a change in attitude in which the vehicle body inclines about an axis extending in a front-and-rear direction and thus the body left and right sides of the vehicle body are displaced in the vertically opposite directions.

This conventional type of vehicle includes a hydraulic shock absorbing apparatus so as to suppress a vibration of the vehicle body and stabilize the attitude.

As a conventional hydraulic shock absorbing apparatus for stabilizing the attitude of a vehicle body, for example, there are provided hydraulic shock absorbing apparatuses described in patent literatures 1 and 2.

The hydraulic shock absorbing apparatus described in patent literature 1 is used for a four-wheel vehicle, and includes at least two hydraulic shock absorbers which are paired in the front-and-rear direction or right-and-left direction of the vehicle body, and a pressure control device communicating with the oil chambers of the hydraulic shock absorbers.

Each hydraulic shock absorber includes a cylinder main body, a piston, a piston rod, lower and upper oil chambers, and a communication path and throttle provided in the piston. This hydraulic shock absorber is disposed between the vehicle body and each wheel.

The pressure control device includes a stepped free piston, and a two-stage cylinder in which the stepped free piston is movably fitted. The stepped free piston is formed by a ring-shaped base located on the outer circumferential side when viewed from the axial direction, and a projection located in the axial portion of the base. The projection projects from the base in the axial direction.

The two-stage cylinder includes a base-side oil chamber in which the base of the free piston is movably fitted, a projection-side oil chamber in which the projection of the free piston is movably fitted, and a high-pressure gas chamber partitioned from these oil chambers by the free piston. In this pressure control device, when the free piston moves, the capacity of the base-side oil chamber and that of the projection-side oil chamber change by equal amounts.

The base-side oil chamber communicates with the lower or upper oil chamber of one of the pair of hydraulic shock absorbers. The projection-side oil chamber communicates with the lower or upper oil chamber of the other hydraulic shock absorber. In addition, the base-side oil chamber and projection-side oil chamber communicate with each other by the communication path in the pressure control device. This communication path is provided with a throttle.

In the hydraulic shock absorbing apparatus described in patent literature 1, if the pair of hydraulic shock absorbers operate in the same direction by the same amount, the same amount of a hydraulic oil flows into or out from each of the base-side oil chamber and projection-side oil chamber of the pressure control device, and then the free piston moves. In this case, the hydraulic oil mainly passes through the throttle of the piston, thereby generating a damping force.

On the other hand, if the pair of hydraulic shock absorbers move in the opposite directions and, for example, the hydraulic oil flows into the base-side oil chamber of the pressure control device while the hydraulic oil flows out from the projection-side oil chamber, the movement of the free piston is suppressed, and the hydraulic oil also flows into the throttle of the pressure control device. In this case, the hydraulic oil passes through both the throttle of the piston and the throttle of the pressure control device, thereby generating a damping force. The damping force in this case is larger than that when the pair of hydraulic shock absorbers operate in the same direction.

Therefore, to suppress pitching of the vehicle body using the hydraulic shock absorbing apparatus described in patent literature 1, one of the hydraulic shock absorbers is arranged on the body front side, and the other hydraulic shock absorber is arranged on the body rear side. To suppress rolling using this hydraulic shock absorbing apparatus, one of the hydraulic shock absorbers is arranged on the body left side, and the other hydraulic shock absorber is arranged on the body right side.

The hydraulic shock absorbing apparatus described in patent literature 2 is used for a four-wheel vehicle, and includes four hydraulic shock absorbers placed between wheels and a vehicle body, and two reserve tanks communicating with the oil chambers of these hydraulic shock absorbers. Each hydraulic shock absorber includes a cylinder main body filled with a hydraulic oil, a piston movably fitted in the cylinder main body, and a piston rod moving together with the piston.

The piston partitions the interior of the cylinder main body into lower and upper oil chambers. This piston is provided with a communication path which makes the lower and upper oil chambers communicate with each other, and a piston valve forming a throttle. The piston rod projects upward from the cylinder main body through the upper oil chamber.

The lower oil chamber of the hydraulic shock absorber connected to the body left-side front wheel and the lower oil chamber of the hydraulic shock absorber connected to the body left-side rear wheel communicate with each other by the body left-side communication path. The lower oil chamber of the hydraulic shock absorber connected to the body right-side front wheel and the lower oil chamber of the hydraulic shock absorber connected to the body right-side rear wheel communicate with each other by the body right-side communication path.

In the middle of each of the body left- and right-side hydraulic oil passages, a reserve tank is connected. This reserve tank includes an oil chamber communicating with the body left- or right-side hydraulic oil passage via a base valve forming a throttle, and a gas chamber partitioned from the oil chamber by the free piston.

According to the hydraulic shock absorbing apparatus described in patent literature 2, when the hydraulic shock absorber expands or contracts, the hydraulic oil passes through the piston valve, thereby generating a damping force. When the hydraulic shock absorber expands, the hydraulic oil flows from the body left- or right-side hydraulic oil passage into the lower oil chamber. When the hydraulic shock absorber contracts, the hydraulic oil flows out from the lower oil chamber into the body left- or right-side hydraulic oil passage.

When the front and rear wheel-side hydraulic shock absorbers operate in the same direction by rolling, the hydraulic oil flows into or out from these hydraulic shock absorbers. If the hydraulic oil flows out from these hydraulic shock absorbers, the hydraulic oil flows from the body left- or right-side hydraulic oil passages into the reserve tank through the base valve. If the hydraulic oil flows into these hydraulic shock absorbers, the hydraulic oil flows out from the reserve tank into the body left- or right-side hydraulic oil passage through the base valve.

That is, at the time of rolling, the hydraulic oil passes through the piston valve and the base valve of the reserve tank, thereby generating a relatively large damping force. On the other hand, when the front and rear wheel-side hydraulic shock absorbers operate in the opposite directions by pitching, the hydraulic oil passes through the body left- or right-side hydraulic oil passage, and flows from the contraction-side hydraulic shock absorber toward the expansion-side hydraulic shock absorber by bypassing the reserve tank. In this case, the amount of the hydraulic oil passing through the base valve is smaller than that at the time of rolling, and thus the magnitude of a generated damping force is relatively small.

### Related Art Literature

### Patent Literature

Patent Literature 1: Japanese Patent Laid-Open No. 8-132846
Patent Literature 2: Japanese Patent No. 3386852

### Disclosure of Invention

### Problem to be Solved by the Invention

The pressure control device of the hydraulic shock absorbing apparatus described in patent literature 1 cannot be readily manufactured because the stepped free piston and two-stage hydraulic shock absorber are used to complicate the structure. On the other hand, the hydraulic shock absorbing apparatus described in patent literature 2 can be manufactured using a part having a simple structure. However, if the pair of hydraulic shock absorbers operate in the opposite directions, the inclination of the vehicle body is unwantedly increased. For example, if, due to sudden braking, the body front-side hydraulic shock absorber contracts and the body rear-side hydraulic shock absorber expands, the hydraulic oil flows out from the body front-side hydraulic shock absorber into the hydraulic oil passage. Then, the hydraulic oil of an amount corresponding to the flow-out amount is instantaneously sent to the body rear-side hydraulic shock absorber by bypassing the reserve tank.

The present invention has been made to solve the problem as described above, and has as its object to provide a hydraulic shock absorbing apparatus for a vehicle which can suppress a change in attitude of the vehicle body without increasing the inclination of the vehicle body when a pair of hydraulic shock absorbers operate in the opposite directions while adopting an arrangement that can be readily manufactured.

### Means of Solution to the Problem

In order to achieve the object, according to the present invention, there is provided a hydraulic shock absorbing apparatus for a vehicle, including a first traveling member and a second traveling member paired and provided in a vehicle body and configured to travel while supporting a vehicle weight, a first connecting member configured to connect the first traveling member to be movable in a vertical direction with respect to the vehicle body, a second connecting member configured to connect the second traveling member to be movable in the vertical direction with respect to the vehicle body, a pair of hydraulic shock absorbers respectively suspended between the first connecting member and the vehicle body, and between the second connecting member and the vehicle body, and the pair of hydraulic shock absorbers each including one end portion formed by a cylinder main body partitioned into a first oil chamber and a second oil chamber by a piston, and including the other end portion formed by a piston rod having the piston, and the first oil chamber and the second oil chamber communicating with each other by a throttle, and a reserve tank including a third oil chamber connected to, via a first hydraulic oil passage, one of the pair of hydraulic shock absorbers provided between the first connecting member and the vehicle body, and connected to the other hydraulic shock absorber via a second hydraulic oil passage, and including a gas chamber partitioned from the third oil chamber by a free piston forming a part of a wall of the third oil chamber, wherein each of the first hydraulic oil passage and the second hydraulic oil passage is individually connected to the third oil chamber, and one of the first oil chamber and the second oil chamber of each hydraulic shock absorber communicates with the third oil chamber.

### Effect of the Invention

In a hydraulic shock absorbing apparatus for a vehicle according to the present invention, if the attitude of a vehicle body changes, and a pair of hydraulic shock absorbers operate in the opposite directions, even if a hydraulic oil is pushed out from the contracting hydraulic shock absorber, the pushed out amount of the hydraulic oil never instantaneously flows into the other hydraulic shock absorber to increase the inclination of the vehicle body, unlike patent literature 2. That is, in the present invention, the hydraulic oil passages are individually connected to the third oil chamber, the whole pushed out amount of the hydraulic oil flows into the third oil chamber via the individual hydraulic oil passage. When the hydraulic oil flows into the third oil chamber, the free piston in the reserve tank is pressed by the hydraulic oil to move toward the gas chamber. Therefore, unlike patent literature 2, it is possible to suppress a change in attitude of the vehicle body by the hydraulic oil instantaneously flowing into the other hydraulic shock absorber without increasing the inclination of the vehicle body. At this time, the magnitude of an oil pressure which presses the free piston corresponds to the change speed and change amount of the attitude of the vehicle body. If the attitude of the vehicle body rapidly changes, the free piston is pressed by a large oil pressure to move at a high speed. In this case, it can be expected that the hydraulic oil is sucked into the reserve tank from the other hydraulic shock absorber side, and the oil pressure acts on the other hydraulic shock absorber in a contracting direction. If the oil pressure acts on the other hydraulic shock absorber in the contracting direction, it is possible to further suppress a change in attitude of the vehicle body. Note that after a lapse of time, the hydraulic oil flowing into the reserve tank receives a gas reaction force, and is pushed out toward the other hydraulic shock absorber. When the hydraulic oil is pushed out in this way, the hydraulic shock absorber expands. Since, however, the time required from the start to the end of a change in attitude of the vehicle body is short, the change in attitude ends before the other hydraulic shock absorber expands, and thus there is no problem.

The reserve tank can be formed using a free piston having a simple shape, and has a simple structure.

Therefore, according to the present invention, it is possible to provide a hydraulic shock absorbing apparatus for a vehicle which can suppress a change in attitude of a vehicle body without increasing the inclination of the vehicle body when a pair of hydraulic shock absorbers operate in the opposite directions while adopting an arrangement that can be readily manufactured.

### Brief Description of Drawings

Fig. 1 is a front view showing the arrangement of a hydraulic shock absorbing apparatus for a vehicle according to the present invention in a state in which the main part is partially cut away;
Fig. 2 is a plan view schematically showing the hydraulic shock absorbing apparatus;
Fig. 3 is a sectional view showing a hydraulic shock absorber;
Fig. 4 is an enlarged sectional view showing part of the hydraulic shock absorber;
Fig. 5 is an enlarged sectional view showing a piston portion of the hydraulic shock absorber;
Fig. 6 is a sectional view showing a reserve tank;
Fig. 7 is a front view showing the hydraulic shock absorbing apparatus for explaining an operation in the state in which the main part is cut away;
Fig. 8 is a plan view schematically showing a modification of the hydraulic shock absorbing apparatus;
Fig. 9 is a plan view schematically showing the modification of the hydraulic shock absorbing apparatus;
Fig. 10 is a plan view schematically showing the modification of the hydraulic shock absorbing apparatus;
Fig. 11 is a plan view showing an example when the hydraulic shock absorbing apparatus for the vehicle according to the present invention is applied to the body front-side suspension of a snowmobile;
Fig. 12 is a plan view schematically showing the arrangement of a hydraulic shock absorbing apparatus according to the second embodiment, and showing an example when the present invention is applied to a four-wheel vehicle;
Fig. 13 is a side view showing the arrangement of a hydraulic shock absorbing apparatus for a vehicle according to the third embodiment, and showing an example in which the present invention is applied to the body rear-side suspension of a snowmobile;
Fig. 14 is a front view schematically showing a hydraulic shock absorbing apparatus for a vehicle according to the fourth embodiment;
Fig. 15 is a front view showing a reserve tank;
Fig. 16 is an enlarged sectional view showing a base valve, in which the cut position corresponds to a position indicated by a line XVI - XVI in Fig. 15;
Fig. 17 is an enlarged sectional view showing a communication path and an on-off valve, in which the cut position corresponds to a position indicated by a line XVII - XVII in Fig. 15; and
Fig. 18 is an enlarged sectional view showing part of a hydraulic shock absorber according to the fifth embodiment.

### Best Mode for Carrying Out the Invention

### (First Embodiment)

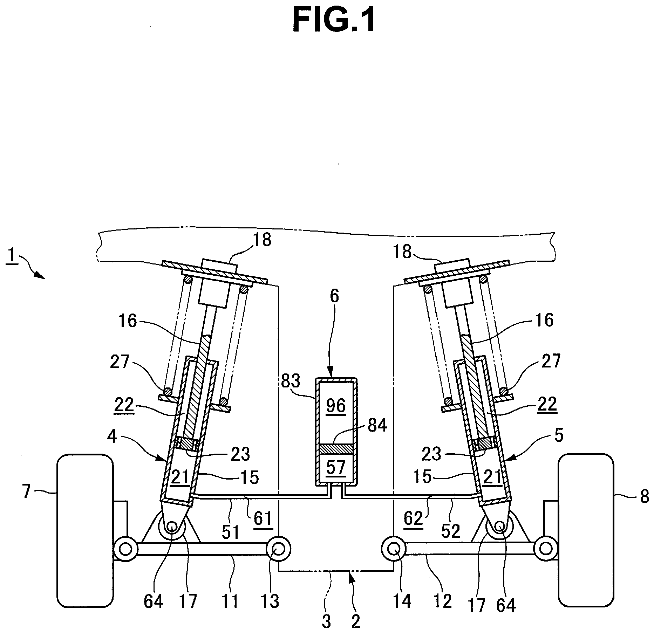

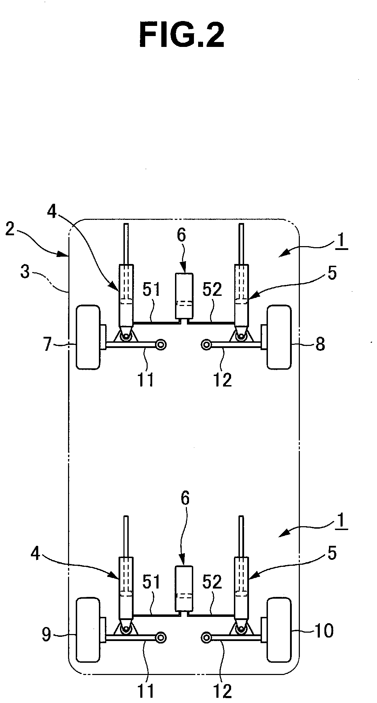

An embodiment of the present invention will be described in detail below with reference to Figs. 1 to 7. In this embodiment, a form in which a pair of hydraulic shock absorbers are paired in the right-and-left direction of a vehicle body will be explained. The schematic arrangement of a hydraulic shock absorbing apparatus for a vehicle according to this embodiment will be described first with reference to Figs. 1 and 2. Fig. 1 shows the hydraulic shock absorbing apparatus when viewed from the rear side of the vehicle body. Fig. 2 is a plan view showing the vehicle body when viewed from above, and shows the hydraulic shock absorbing apparatus when viewed from the rear side of the vehicle body for the sake of convenience. The hydraulic shock absorbing apparatus for the vehicle according to this embodiment is descried in claims 1, 5, and 6.

A hydraulic shock absorbing apparatus 1 for a vehicle shown in Fig. 1 is used for an automobile 2 (see Fig. 2), and includes a pair of hydraulic shock absorbers 4 and 5 paired in the right-and-left direction of a vehicle body 3, and a reserve tank 6 connected to the hydraulic shock absorbers 4 and 5. The automobile 2 indicates a four-wheel vehicle having a left-and-right pair of front wheels 7 and 8 and a left-and-right pair of rear wheels 9 and 10. Note that the four-wheel vehicle is not limited to the automobile, and includes any types of four-wheel vehicles such as a saddle type ATV (All Terrain Vehicle) and an open type vehicle like a golf cart. These wheels 7 to 10 rotate on a road surface while supporting the vehicle weight, thereby traveling. In this embodiment, the body left-side front wheel 7 and rear wheel 9 serve as the "first traveling members" of the present invention, and the body right-side front wheel 8 and rear wheel 10 on the body right side serve as the "second traveling members" of the present invention.

The hydraulic shock absorber 4 or 5 is provided for each of the four wheels. That is, the automobile 2 according to this embodiment includes the left-and-right pair of hydraulic shock absorbers 4 and 5 and the reserve tank 6 for each of a body front portion and a body rear portion.

The two sets of the left-and-right pairs of hydraulic shock absorbers 4 and 5 and the reserve tanks 6 adopt the same arrangement. The left-and-right pair of hydraulic shock absorbers 4 and 5 and the reserve tank 6, which are located in the body front portion, will be described below. The left-and-right pair of hydraulic shock absorbers 4 and 5 and the reserve tank 6, which are located in the body rear portion, are denoted by the same reference numerals and a description thereof will be omitted. Fig. 1 shows the hydraulic shock absorbers 4 and 5 and reserve tank 6 in the body front portion when viewed from the rear side of the vehicle body 3.

As shown in Fig. 1, among the left-and-right pair of hydraulic shock absorbers 4 and 5, the hydraulic shock absorber 4 located on the body left side is provided between the upper left portion of the vehicle body 3 and a left arm 11 provided in the lower left portion of the vehicle body 3. The hydraulic shock absorber 5 located on the body right side is provided between the upper right portion of the vehicle body 3 and a right arm 12 provided in the lower right portion of the vehicle body 3.

The left arm 11 is swingably connected to the lower left portion of the vehicle body 3 via a connecting shaft 13, and extends from the connecting portion toward the left side of the vehicle body 3. The right arm 12 is swingably connected to the lower right portion of the vehicle body 3 via a connecting shaft 14, and extends from the connecting portion toward the right side of the vehicle body 3. The axes of the connecting shafts 13 and 14 are parallel to the back-and-forth direction of the vehicle body 3.

The body left-side front wheel 7 or rear wheel 9 is rotatably provided in the swing end portion of the left arm 11. The body right-side front wheel 8 or rear wheel 10 is rotatably provided in the swing end portion of the right arm 12. That is, the left arm 11 connects the body left-side front wheel 7 or rear wheel 9 to be movable in the vertical direction with respect to the vehicle body 3. The right arm 12 connects the front wheel 8 or rear wheel 10 on the body right side to be movable in the vertical direction with respect to the vehicle body 3.

In this embodiment, the left arm 11 forms the "first connecting member" of the present invention, and the right arm 12 forms the "second connecting member" of the present invention.

Each of the hydraulic shock absorbers 4 and 5 is formed by a hydraulic cylinder including a cylinder main body 15 and a piston rod 16. One end portion of each of the hydraulic shock absorbers 4 and 5 is formed by the cylinder main body 15 and the other end portion is formed by the piston rod 16.

The cylinder main body 15 is swingably connected to the left arm 11 or the right arm 12 via a wheel-side connecting member 17. The piston rod 16 is mounted on the upper left or right portion of the vehicle body 3 via a body-side connecting member 18. The piston rod 16 is connected to a piston 23 which partitions the interior of the cylinder main body 15 into a first oil chamber 21 and a second oil chamber 22. The first oil chamber 21 is formed at one end of the cylinder main body 15 connected to the left arm 11 or the right arm 12. The second oil chamber 22 is formed at the other end of the cylinder main body 15 through which the piston rod 16 extends.

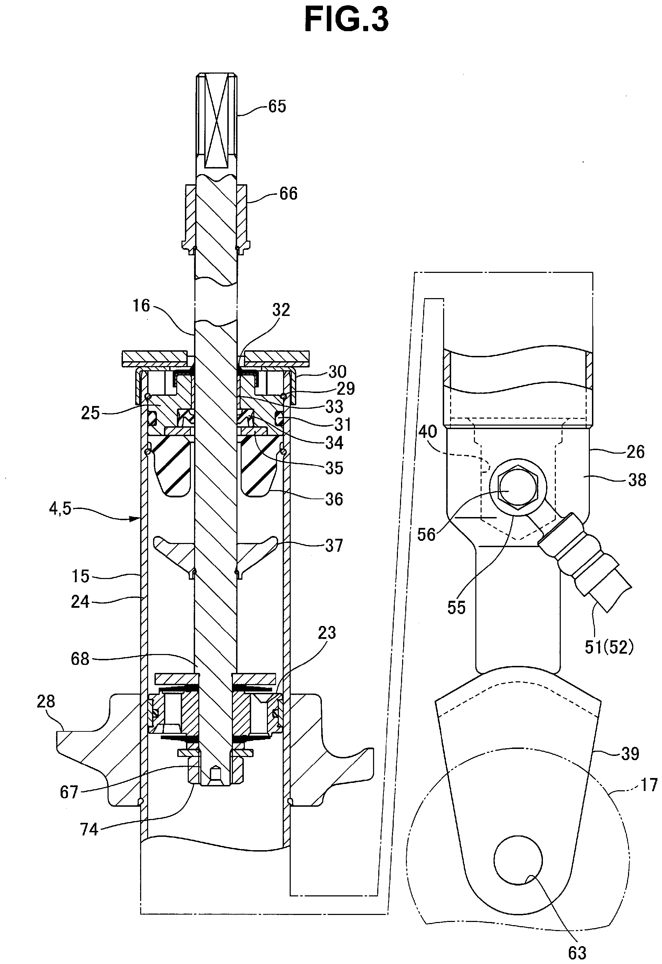

As shown in Fig. 3, the cylinder main body 15 includes a cylinder 24 extending in the vertical direction in Fig. 3, a support member 25 which blocks one end portion of the cylinder 24 in a state in which the piston rod 16 extends through, and a lid member 26 which blocks the other end portion of the cylinder 24. A spring receiving member 28 which supports the lower end portion of a shock absorbing spring 27 (see Fig. 1) is mounted on the outer circumferential portion of the cylinder 24. The shock absorbing spring 27 is mounted while being compressed between the spring receiving member 28 and the body-side connecting member 18. Note that the shock absorbing spring 27 may be provided separately from the hydraulic shock absorber 4 or 5.

The support member 25 is formed in a ring shape, and fitted in the inner circumferential portion of the cylinder 24 in a state in which the piston rod 16 extends through a hollow portion. The support member 25 is fixed, by a circlip 29 fixed to the inner circumferential portion of the cylinder 24 and a cap 30 abutting against the outer end face of the cylinder 24, in a state in which it cannot move with respect to the cylinder 24. The cap 30 is mounted on the support member 25 by a fixing bolt (not shown).

An O-ring 31 for sealing a portion with respect to the cylinder 24 is mounted on the outer circumferential portion of the support member 25. A plurality of members are mounted on the inner circumferential portion of the support member 25 in line in the axial direction. The plurality of members include a dust seal 32, a bearing 33, an oil seal 34, a washer 35, and stopper rubber 36 from above in Fig. 3. The dust seal 32 prevents a foreign substance such as dust or water from entering the cylinder 24 through a gap between the support member 25 and the piston rod 16.

The bearing 33 slidably supports the piston rod 16, and is press-fitted in the support member 25. That is, the piston rod 16 is movably supported by the support member 25 via the bearing 33.

The oil seal 34 prevents the hydraulic oil in the cylinder 24 (second oil chamber 22) from leaking outside through the gap between the support member 25 and the piston rod 16. The washer 35 supports the stopper rubber 36. The stopper rubber 36 reduces a shock when the hydraulic shock absorber 4 or 5 expands most. When the hydraulic shock absorber 4 or 5 expands most, a plate 37 mounted on one end portion of the piston rod 16 abuts against the stopper rubber 36.

The lid member 26 includes a lid main body 38 fitted in the other end portion of the cylinder 24, and a U-shaped mounting plate 39 provided at the lower end of the lid main body 38. The lid main body 38 is fixed to the cylinder 24 by a screw or welding. The fitting portion of the lid main body 38 and cylinder 24 adopts an arrangement which prevents the hydraulic oil from leaking.

A concave portion 40 is formed in a portion of the lid main body 38 which is inserted into the cylinder 24. This concave portion 40 is open in the cylinder 24, and forms part of the first oil chamber 21.

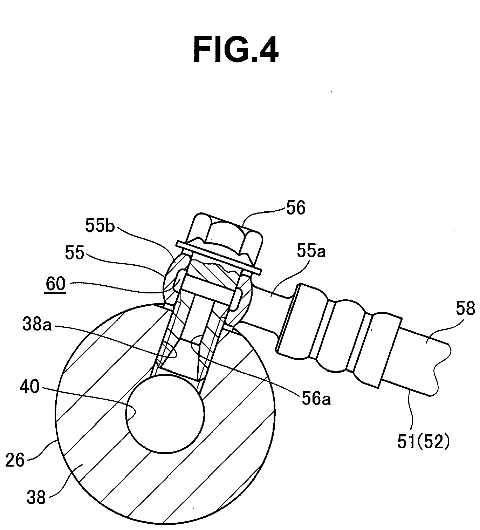

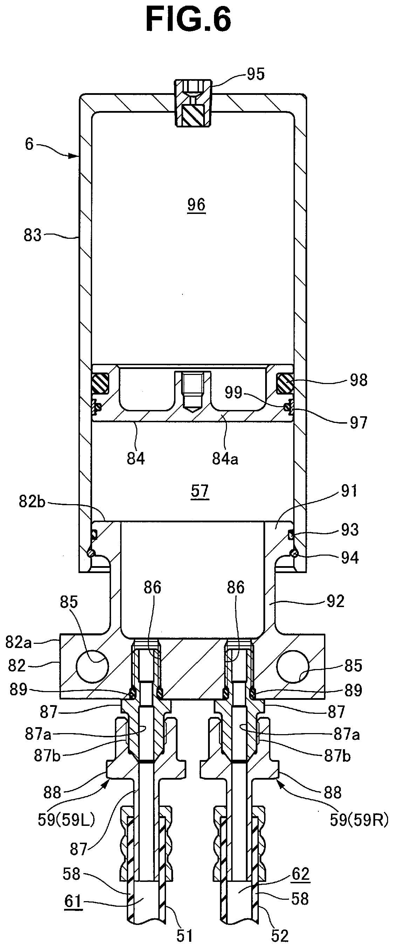

As shown in Fig. 4, a shock absorber-side splicing fitting 55 of a first oil hose 51 or a second oil hose 52 is mounted, by a passage forming bolt 56, on a portion of the lid main body 38 which is exposed outside the cylinder 24. Each of the first oil hose 51 and the second oil hose 52 makes the first oil chamber 21 in the cylinder main body 15 communicate with a third oil chamber 57 (see Fig. 6) of the reserve tank 6 (to be described later).

The first oil hose 51 connects the reserve tank 6 and the hydraulic shock absorber 4 located on the body left side. In the hydraulic shock absorbing apparatus 1 shown in Fig. 2, the hydraulic shock absorber 4 for the left front wheel and the body front-side reserve tank 6 are connected by the first oil hose 51. Furthermore, the hydraulic shock absorber 4 for the left rear wheel and the body rear-side reserve tank 6 are connected by the first oil hose 51.

The second oil hose 52 connects the reserve tank 6 and the hydraulic shock absorber 5 located on the body right side. In the hydraulic shock absorbing apparatus 1 shown in Fig. 2, the hydraulic shock absorber 5 for the right front wheel and the body front-side reserve tank 6 are connected by the second oil hose 52. Furthermore, the hydraulic shock absorber 5 for the right rear wheel and the body rear-side reserve tank 6 are connected by the second oil hose 52.

As shown in Fig. 4, each of the first and second oil hoses 51 and 52 is formed by a hose main body 58, the shock absorber-side splicing fitting 55, and a reserve tank-side splicing fitting 59 (see Fig. 6). The hose main body 58 is formed by flexible rubber. The shock absorber-side splicing fitting 55 is mounted on the hydraulic shock absorber-side end portion of the hose main body 58. The reserve tank-side splicing fitting 59 is provided in the reserve tank-side end portion of the hose main body 58. The shock absorber-side splicing fitting 55 is formed by a pipe 55a secured to the hose main body 58, and an annular member 55b mounted at the distal end of the pipe 55a. The passage forming bolt 56 is extended through the hollow portion of the annular member 55b.

An oil hole 56a is formed in the passage forming bolt 56. The oil hole 56a is connected to a first hydraulic oil passage 61 (see Fig. 6) in the first oil hose 51 and a second hydraulic oil passage 62 in the second oil hose 52 via an oil passage 60 formed in the pipe 55a and the annular member 55b. The passage forming bolt 56 is threadably engaged with a screw hole 38a of the lid main body 38 in a state in which the oil hole 56a communicates with the concave portion 40 in the lid main body 38, thereby fixing the annular member 55b to the lid member 26.

As shown in Fig. 3, a through hole 63 is formed in the U-shaped mounting plate 39 of the lid member 26. A connecting shaft 64 (see Fig. 1) of the wheel-side connecting member 17 is extended through the through hole 63. Although not shown in detail, the wheel-side connecting member 17 has a structure in which the connecting shaft 64 and the left arm 11 or the right arm 12 are connected by shock absorbing rubber.

The piston rod 16 of the hydraulic shock absorber 4 or 5 is formed by one rod body. As shown in Fig. 3, in the upper end portion of the piston rod 16 on the opposite side of the cylinder main body 15, a male screw 65 is formed and an adapter 66 is provided. The male screw 65 is formed to mount the body-side connecting member 18 on the piston rod 16. Although not shown in detail, the body-side connecting member 18 has a structure in which the upper end portion of the piston rod 16 and the left or right upper portion of the vehicle body 3 are connected by shock absorbing rubber.

In the lower end portion, located in the cylinder main body 15, of the piston rod 16, a male screw 67 and a step portion 68 are formed to mount the piston 23.

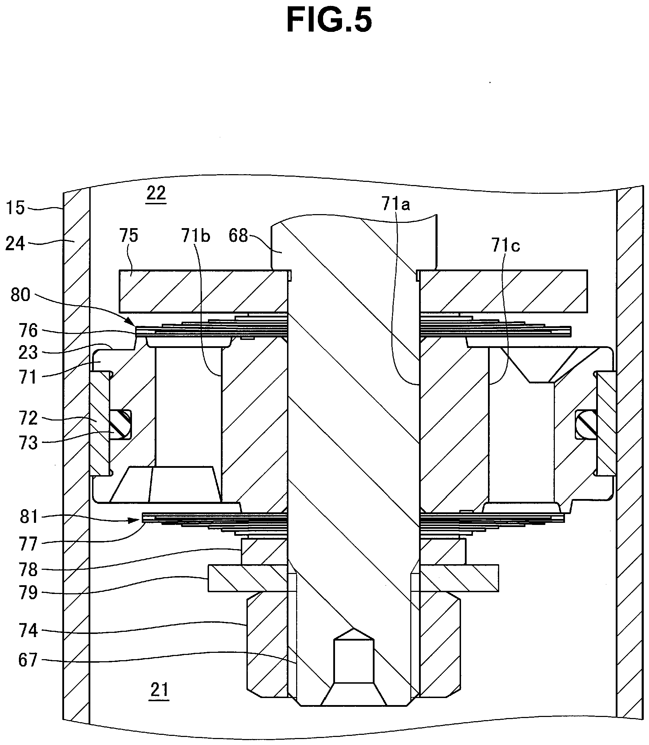

As shown in Fig. 5, the piston 23 is formed by a piston main body 71 formed in a ring shape, a ring-shaped bearing 72 and an O-ring 73 which are provided in the outer circumferential portion of the piston main body 71, and the like. The bearing 72 smoothens sliding between the piston main body 71 and the cylinder 24 of the cylinder main body 15. The O-ring 73 seals a portion between the inner circumferential surface of the bearing 72 and the piston main body 71 and widens the bearing 72 outward in the radial direction.

In the piston main body 71, a through hole 71a in which the piston rod 16 is fitted, and a plurality of oil holes (to be described later) are formed. The through hole 71a is located in the axial portion of the piston main body 71. The plurality of oil holes include a contraction-side oil hole 71b extending through the left side of the piston main body 71 in Fig. 5 in the axial direction, and an expansion-side oil hole 71c extending through the right side of the piston main body 71 in Fig. 5 in the axial direction. A plurality of contraction-side oil holes 71b and a plurality of expansion-side oil holes 71c are alternately provided at an appropriate interval in the circumferential direction of the piston main body 71.

One end portion (the end portion on the side of the first oil chamber 21) of the contraction-side oil hole 71b is open to the first oil chamber 21. One end portion (the end portion on the side of the second oil chamber 22) of the expansion-side oil hole 71c is open to the second oil chamber 22.

The piston main body 71 according to this embodiment is sandwiched and fixed between the step portion 68 of the piston rod 16 and a fixing nut 74 threadably engaged with the male screw 67 in the lower end portion of the piston rod 16 together with a plurality of members (to be described later).

A ring-shaped plate 75 and a plurality of disk-shaped first leaf springs 76 are sandwiched between the piston main body 71 and the step portion 68. A plurality of disk-shaped second leaf springs 77, a shim 78, and a washer 79 are sandwiched between the piston main body 71 and the fixing nut 74.

The first leaf springs 76 close an opening on the side of the second oil chamber 22 in the contraction-side oil hole 71b formed in the piston main body 71. The first leaf springs 76 form a check valve 80 which permits the hydraulic oil to flow through the contraction-side oil hole 71b from the side of the first oil chamber 21 to the side of the second oil chamber 22.

The second leaf springs 77 close an opening on the side of the first oil chamber 21 in the expansion-side oil hole 71c. The second leaf springs 77 form a check valve 81 which permits the hydraulic oil to flow through the expansion-side oil hole 71c from the side of the second oil chamber 22 to the side of the first oil chamber 21.

In this embodiment, the contraction-side oil hole 71b, the expansion-side oil hole 71c, and the first and second leaf springs 76 and 77 form a "throttle" in an invention described in claim 1.

As shown in Fig. 6, the reserve tank 6 includes a base member 82, a cylinder 83 having a cylindrical shape with a closed end, and a free piston 84. The reserve tank-side splicing fittings 59 of the first and second oil hoses 51 and 52 are mounted on the base member 82. The cylinder 83 is supported by the base member 82. The free piston 84 is provided in the cylinder 83. The reserve tank 6 according to this embodiment is arranged at the center of the vehicle body 3 in the right-and-left direction.

The base member 82 is formed by a plate-like portion 82a on which the two reserve tank-side splicing fittings 59 are mounted, and a columnar portion 82b connected to the cylinder 83. Two through holes 85 are formed in the plate-like portion 82a. Fixing bolts (not shown) for fixing the reserve tank 6 to the vehicle body 3 are inserted into the through holes 85.

The first oil hose 51 is connected to a splicing fitting 59L located on the left side in Fig. 6 out of the two splicing fittings 59. The second oil hose 52 is connected to a splicing fitting 59R located on the right side.

Each of the splicing fittings 59L and 59R is formed by a nipple 87 threadably engaged with a screw hole 86 of the base member 82, and a nut member 88 with the pipe 55a secured to the hose main body 58. The screw hole 86 extends through the plate-like portion 82a of the base member 82, and makes the interior and exterior of the columnar portion 82b communicate with each other. An O-ring 89 for sealing is mounted between the nipple 87 and an open end portion outside the screw hole 86.

The nipple 87 is formed in a columnar shape with an through hole 87a. A male screw 87b is formed in the distal end portion of the nipple 87.

The nut member 88 is threadably engaged with the male screw 87b of the nipple 87. When the nut member 88 is connected to the nipple 87 in this way, the first and second hydraulic oil passages 61 and 62 in the columnar portion 82b and hose main bodies 58 communicate with each other via the splicing fittings 59L and 59R.

The columnar portion 82b of the base member 82 includes a large-diameter portion 91 fitted in the opening of the cylinder 83, and a small-diameter portion 92 connecting the large-diameter portion 91 and the plate-like portion 82a. An O-ring 93 for sealing a portion with respect to the cylinder 83 is mounted on the large-diameter portion 91. A space inside the columnar portion 82b is open to the interior of the cylinder 83.

A circlip 94 which regulates the protrusion of the base member 82 outside the free piston 84 is mounted in the opening of the cylinder 83. A plug member 95 is provided in the bottom portion of the cylinder 83. The plug member 95 is used to insert a gas injection needle (not shown) when injecting N₂ gas into the cylinder.

The free piston 84 provided in the cylinder 83 is movably fitted on the inner circumferential surface of the cylinder 83. The free piston 84 partitions the interior of the cylinder 83 into the third oil chamber 57 on the side of the base member 82 and a gas chamber 96 on the opposite side. The gas chamber 96 is filled with N₂ gas of a predetermined pressure.

The free piston 84 according to this embodiment is formed by a disk-shaped piston main body 84a, a ring-shaped bearing 97 and first O-ring 98 provided in the outer circumferential portion of the piston main body 84a, and a second O-ring 99 provided between the inner circumferential surface of the bearing 97 and the piston main body 71. The bearing 97 smoothens sliding between the piston main body 71 and the cylinder 83. The first O-ring 98 seals a portion between the piston main body 71 and the cylinder 83. The second O-ring 99 seals a portion between the inner circumferential surface of the bearing 97 and the piston main body 71, and also widens the bearing 97 outward in the radial direction.

The third oil chamber 57 is formed by a space in the cylinder 83 located on the opening side with respect to the free piston 84, and a space in the columnar portion 82b. The third oil chamber 57 is filled with the hydraulic oil. The free piston 84 forms part of the wall of the third oil chamber 57, and moves in a direction away from the base member 82 when the hydraulic oil is sent from the first oil hose 51 or the second oil hose 52 to the third oil chamber 57 against the pressure of the gas in the gas chamber 96. When the hydraulic oil flows out from the third oil chamber 57 into the first oil hose 51 or the second oil hose 52, the free piston 84 moves in a direction closer to the base member 82.

The first oil hose 51 connected to the reserve tank 6 connects the first oil chamber 21 of the hydraulic shock absorber 4 located on the body left side and the third oil chamber 57 of the reserve tank 6. The second oil hose 52 connects the first oil chamber 21 of the hydraulic shock absorber 5 located on the body right side and the third oil chamber 57 of the reserve tank 6. The interior of each of the first oil hose 51 and the second oil hose 52 is filled with the hydraulic oil.

The first hydraulic oil passage 61 in the first oil hose 51 and the second hydraulic oil passage 62 in the second oil hose 52 are individually connected to the third oil chamber 57. As shown in Fig. 6, the first hydraulic oil passage 61 and the second hydraulic oil passage 62 are connected to the third oil chamber 57 in a state in which they extend in parallel with each other. An opening of each of the first and second hydraulic oil passages 61 and 62, which serves as a boundary with the third oil chamber 57, is directed to the free piston 84.

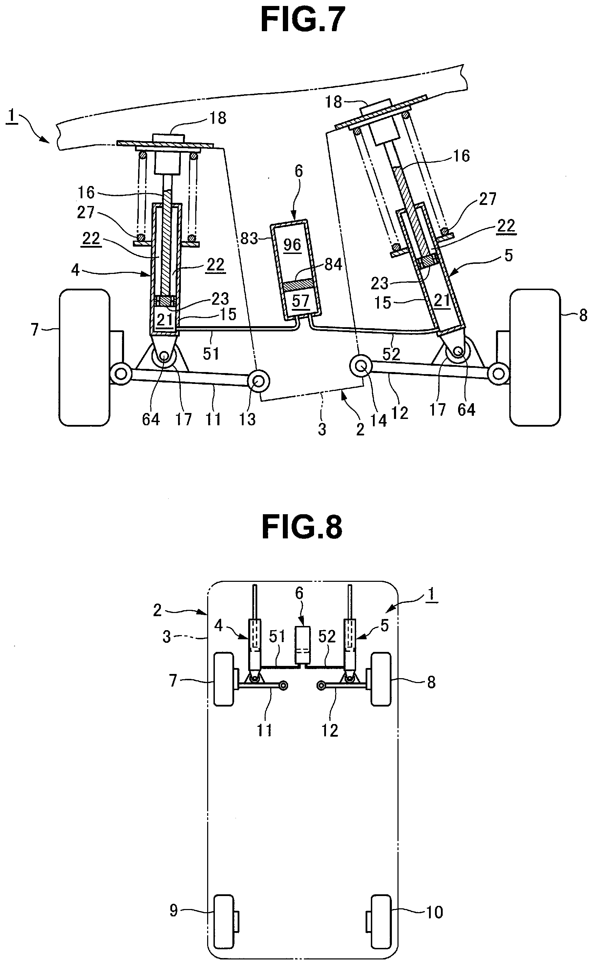

In the vehicle body 3 including the hydraulic shock absorbing apparatus 1 for the vehicle with the above arrangement, for example, when a handle operation in the right direction is performed during traveling, the vehicle body 3 is to roll to the left side, as shown in Fig. 7. At this time, the pair of hydraulic shock absorbers 4 and 5 are to operate in the opposite directions. In this case, the hydraulic oil is pushed out from the contracting body left-side hydraulic shock absorber 4. In synchronism with the flow-out of the hydraulic oil, the free piston 84 in the reserve tank 6 is pressed by the hydraulic oil to move toward the gas chamber 96.

In this embodiment, the first hydraulic oil passage 61 and the second hydraulic oil passage 62 are individually connected to the third oil chamber 57, and the whole pushed out amount of the hydraulic oil flows into the third oil chamber 57 via the individual hydraulic oil passage 61 or 62. As described above, when the hydraulic oil flows into the third oil chamber 57, the free piston 84 in the reserve tank 6 is pressed by the hydraulic oil to move toward the gas chamber 96. Therefore, unlike patent literature 2, it is possible to suppress a change in attitude of the vehicle body 3 by the hydraulic oil instantaneously flowing into the other hydraulic shock absorber without increasing the inclination of the vehicle body.

The magnitude of the oil pressure which presses the free piston 84 corresponds to the change speed and change amount of the attitude of the vehicle body 3. If the attitude of the vehicle body 3 rapidly changes, the free piston 84 is pressed by a large oil pressure to move at high speed. In this case, it can be expected that the hydraulic oil is sucked into the reserve tank 6 from the side of the other hydraulic shock absorber (hydraulic shock absorber 5), and the oil pressure acts on the other hydraulic shock absorber in the contracting direction. If the oil pressure acts on the other hydraulic shock absorber in the contracting direction, it is possible to further suppress a change in attitude of the vehicle body 3. Note that after a lapse of time, the hydraulic oil flowing into the reserve tank 6 receives a gas reaction force, and is pushed out toward the other hydraulic shock absorber. When the hydraulic oil is pushed out toward the other hydraulic shock absorber, the hydraulic shock absorber expands. Since, however, the time required from the start to the end of a change in attitude of the vehicle body 3 is short, the change in attitude ends before the other hydraulic shock absorber expands, and thus there is no problem.

The reserve tank 6 according to this embodiment is formed using the free piston 84 having a simple shape, and has a simple structure.

Therefore, according to this embodiment, it is possible to provide the hydraulic shock absorbing apparatus for the vehicle which can suppress a change in attitude of the vehicle body 3 without increasing the inclination of the vehicle body 3 at the time of rolling in which the pair of hydraulic shock absorbers 4 and 5 operate in the opposite directions while adopting an arrangement that can be readily manufactured.

In addition, the reserve tank 6 according to this embodiment is arranged at the center of the vehicle body 3 in the right-and-left direction. By adopting this arrangement, a gas pressure acting on the body left-side hydraulic shock absorber 4 via the hydraulic oil and a gas pressure acting on the body right-side hydraulic shock absorber 5 via the hydraulic oil can be equalized. Therefore, by incorporating the hydraulic shock absorbing apparatus 1, the riding comfort of the vehicle is further improved.

The vehicle according to this embodiment is a four-wheel vehicle having the left-and-right pair of front wheels 7 and 8 and the left-and-right pair of rear wheels 9 and 10. According to this embodiment, the first traveling members correspond to the front wheel 7 and rear wheel 9 located on the body left side, and the second traveling members correspond to the front wheel 8 and rear wheel 10 on the body right side. In this embodiment, the pair of hydraulic shock absorbers 4 and 5 of the present invention are provided on each of the body front and rear sides. The pair of hydraulic shock absorbers 4 and 5 located on the body front side are provided between the vehicle body 3 and the left arm 11 and right arm 12 for the front wheels (the first and second connecting portions located on the body front side). The pair of hydraulic shock absorbers 4 and 5 located on the body rear side are provided between the vehicle body 3 and the left arm 11 and right arm 12 for the rear wheels (the first and second connecting portions located on the body rear side).

Therefore, according to this embodiment, it is possible to provide a hydraulic shock absorbing apparatus for a vehicle which can suppress rolling of the four-wheel vehicle by a simple structure.

In the vehicle incorporating the hydraulic shock absorbing apparatus 1 for the vehicle according to this embodiment, for example, even if one of the wheels in the right-and-left direction crosses over a projection on a road, a variation in oil pressure is never transferred to the hydraulic shock absorber on the other wheel side. The reason for this is that the hydraulic oil pushed out from the hydraulic shock absorber connected to the wheel can be temporarily absorbed by the reserve tank 6. Consequently, according to this embodiment, disturbance which does not largely influence a change in attitude of the vehicle body can also be absorbed, thereby further improving the riding comfort of the vehicle.

### (Modification 1 of First Embodiment)

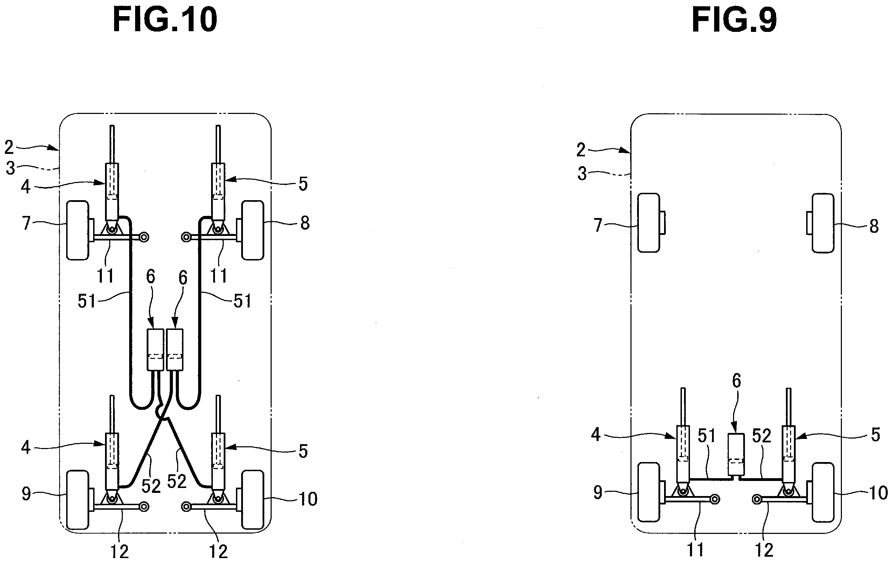

The hydraulic shock absorbing apparatus for the vehicle according to the present invention can be arranged, as shown in Figs. 8 to 10. A hydraulic shock absorbing apparatus for the vehicle shown in each of Figs. 8 and 9 is an example of a hydraulic shock absorbing apparatus described in claim 6.

A hydraulic shock absorbing apparatus 1 for a vehicle shown in Fig. 8 is formed by a hydraulic shock absorber 4 for a left front wheel, a hydraulic shock absorber 5 for a right front wheel, and a reserve tank 6 connected to the hydraulic shock absorbers 4 and 5. Hydraulic shock absorbers for rear wheels are not shown but individual hydraulic shock absorbers which are not connected to other hydraulic shock absorbers are used.

A hydraulic shock absorbing apparatus 1 shown in Fig. 9 is formed by a hydraulic shock absorber 4 for a left rear wheel, a hydraulic shock absorber 5 for a right rear wheel, and a reserve tank 6 connected to the hydraulic shock absorbers 4 and 5. Hydraulic shock absorbers for front wheels are not shown but individual hydraulic shock absorbers which are not connected to other hydraulic shock absorbers are used.

In the hydraulic shock absorbing apparatus 1 shown in Fig. 8 or 9, it is possible to suppress rolling of an automobile 2 while adopting a simple structure, similarly to a case in which the embodiment shown in Figs. 1 to 7 is adopted.

A hydraulic shock absorbing apparatus for a vehicle shown in Fig. 10 is an example of a hydraulic shock absorbing apparatus described in claim 7.

According to this embodiment, there are provided two pairs of first and second traveling members. The first pair of first and second traveling members are a pair of traveling members formed from a body left-side front wheel 7 and a body right-side rear wheel 10. The second pair of first and second traveling members are a pair of traveling members formed from a body right-side front wheel 8 and a body left-side rear wheel 9.

In this embodiment, there are also provided two pairs of hydraulic shock absorbers. The first pair of hydraulic shock absorbers include a hydraulic shock absorber 4 for the body left-side front wheel 7 and a hydraulic shock absorber 5 for the body right-side rear wheel 10. The second pair of hydraulic shock absorbers include a hydraulic shock absorber 5 for the body right-side front wheel 8 and a hydraulic shock absorber 4 for the body left-side rear wheel 9. Therefore, the hydraulic shock absorber 4 for the left front wheel 7 is connected to one reserve tank 6 via a first oil hose 51 (first hydraulic oil passage 61). The hydraulic shock absorber 5 for the right rear wheel 10 is connected to the reserve tank 6 via a second oil hose 52 (second hydraulic oil passage 62).

Furthermore, the hydraulic shock absorber 5 for the right front wheel 8 is connected to another reserve tank 6 via a first oil hose 51 (first hydraulic oil passage 61). The hydraulic shock absorber 4 for the left rear wheel 9 is connected to the other reserve tank 6 via a second oil hose 52 (second hydraulic oil passage 62).

In this embodiment shown in Fig. 10, when a vehicle body 3 rolls and when the vehicle body 3 pitches, a change in attitude of the vehicle body 3 is suppressed, similarly to the embodiment shown in Figs. 1 to 9. That is, the whole amount of the hydraulic oil pushed out from the contracting hydraulic shock absorber flows into the third oil chamber 57 via the individual first hydraulic oil passage 61 or 62, and the free piston 84 in the reserve tank 6 is pressed by the hydraulic oil to move toward the gas chamber 96. Therefore, unlike the patent literature 2, it is possible to suppress a change in attitude of the vehicle body 3 by the hydraulic oil instantaneously flowing into the other hydraulic shock absorber without increasing the inclination of the vehicle body.

It can be expected that if the attitude of the vehicle body 3 rapidly changes, the hydraulic oil is also sucked into the reserve tank 6 from the other hydraulic shock absorber side, and the oil pressure acts on the other hydraulic shock absorber in the contracting direction. In this case, it is possible to further suppress a change in attitude of the vehicle body 3. Note that after a lapse of time, the hydraulic oil flowing into the reserve tank 6 receives a gas reaction force, and is pushed out toward the other hydraulic shock absorber. When the hydraulic oil is pushed out toward the other hydraulic shock absorber, the hydraulic shock absorber expands. Since, however, the time required from the start to the end of a change in attitude of the vehicle body 3 is short, the change in attitude ends before the other hydraulic shock absorber expands, and thus there is no problem.

Consequently, according to the embodiment shown in Fig. 10, even if the four-wheel vehicle rolls and pitches at the same time, it is possible to suppress a change in attitude of the vehicle body 3 by a simple structure.

### (Modification 2 of First Embodiment)

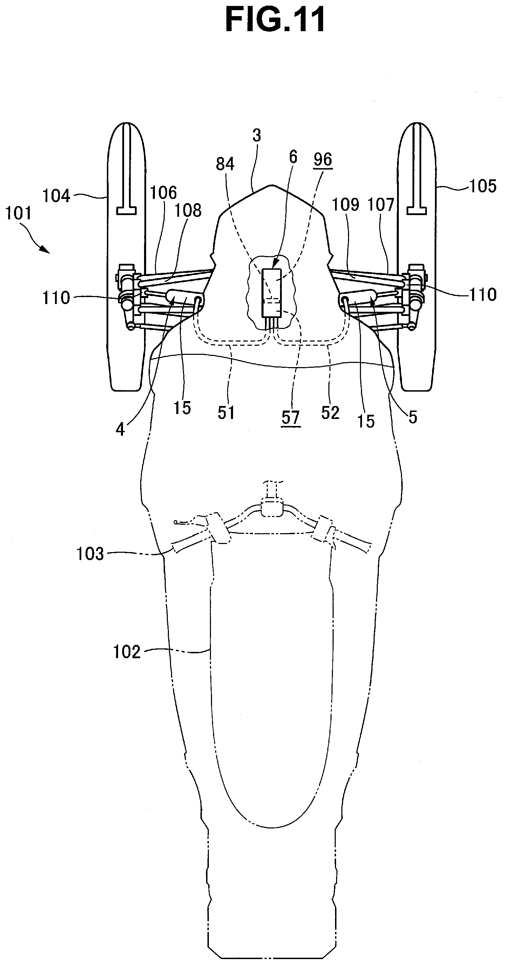

The hydraulic shock absorbing apparatus for the vehicle according to the present invention is applicable to the body front-side suspension of a snowmobile, as shown in Fig. 11. The same reference numerals as those of the members described with reference to Figs. 1 to 10 denote the same or similar members in Fig. 11, and a detailed description thereof will appropriately be omitted. A hydraulic shock absorbing apparatus for a vehicle according to this embodiment corresponds to a hydraulic shock absorbing apparatus described in claim 8.

An occupant (not shown) sits astride a seat 102, and drives a snowmobile 101 shown in Fig. 11 by grasping a handle bar 103. The vehicle weight of the body front portion of the snowmobile 101 is supported by a body left-side steering ski 104 and a body right-side steering ski 105.

These steering skis 104 and 105 are connected to the vehicle body 3 via suspensions with a left-and-right pair of lower arms 106 and 107 and a left-and-right pair of upper arms 108 and 109 to be movable in the vertical direction. The steering skis 104 and 105 are steered in the left or right direction when the handle bar 103 is operated in the left or right direction. In this embodiment, the body left-side steering ski 104 corresponds to the "first traveling member" of the present invention, and the body right-side steering ski 105 corresponds to the "second traveling member" of the present invention.

A body left-side hydraulic shock absorber 4 is provided between the swing end portion of the body left-side lower arm 106 and the left upper portion of a vehicle body 3. A body right-side hydraulic shock absorber 5 is provided between the swing end portion of the body right-side lower arm 107 and the right upper portion of the vehicle body 3. In this embodiment, the body left-side lower arm 106 corresponds to the "first connecting member" of the present invention, and the body right-side lower arm 107 corresponds to the "second connecting member" of the present invention.

In each of the hydraulic shock absorbers 4 and 5 according to this embodiment, a cylinder main body 15 is connected to the vehicle body 3, unlike the first embodiment. In addition, each of the hydraulic shock absorbers 4 and 5 contracts or expands when the vehicle body 3 rolls. Although not shown, a shock absorbing spring is provided between the cylinder main body 15 of each of the hydraulic shock absorbers 4 and 5 and a bracket 110 on the side of a corresponding one of the lower arms 106 and 107.

The first oil chamber (not shown) of the body left-side hydraulic shock absorber 4 is connected to a third oil chamber 57 of a reserve tank 6 via a first oil hose 51. The first oil chamber (not shown) of the body right-side hydraulic shock absorber 5 is connected to the third oil chamber 57 of the reserve tank 6 via a second oil hose 52. The hydraulic shock absorbers 4 and 5 and the reserve tank 6 are the same as those used when adopting the first embodiment. The reserve tank 6 according to this embodiment is also arranged at the center of the vehicle body 3 in the right-and-left direction.

According to this embodiment, when the vehicle body 3 of the snowmobile 101 rolls, a change in attitude of the vehicle body 3 is suppressed by a simple structure, similarly to the embodiment shown in Figs. 1 to 9.

The reserve tank 6 according to the embodiment is arranged at the center of the vehicle body 3 in the right-and-left direction. By adopting this arrangement, a gas pressure acting on the body left-side hydraulic shock absorber 4 via the hydraulic oil and a gas pressure acting on the body right-side hydraulic shock absorber 5 via the hydraulic oil can be equalized. Consequently, by incorporating this hydraulic shock absorbing apparatus, the riding comfort of the snowmobile 101 is further improved.

### (Second Embodiment)

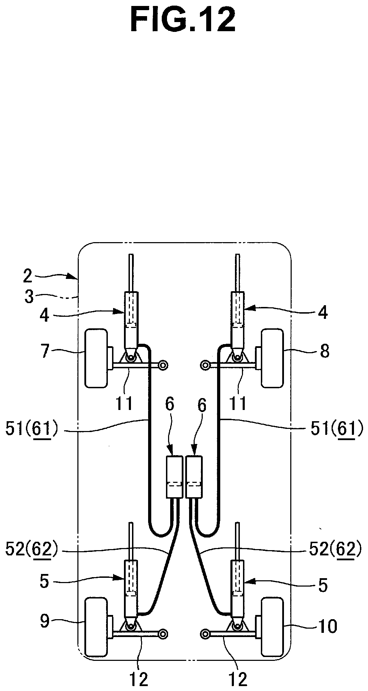

The hydraulic shock absorbing apparatus for the vehicle according to the present invention can be arranged, as shown in Fig. 12. The same reference numerals as those of the members described with reference to Figs. 1 to 11 denote the same or similar members in Fig. 12, and a detailed description thereof will appropriately be omitted. A hydraulic shock absorbing apparatus for a vehicle shown in Fig. 12 is an example of a hydraulic shock absorbing apparatus described in claim 9.

The vehicle according to this embodiment is a four-wheel vehicle having a left-and-right pair of front wheels 7 and 8 and a left-and-right pair of rear wheels 9 and 10. In this embodiment, pairs of first and second traveling members include a pair of traveling members formed from the body-left side front wheel 7 and rear wheel 9, and a pair of traveling members formed from the body right-side front wheel 8 and rear wheel 10. Furthermore, pairs of first and second connecting members according to this embodiment include two left arms 11 and 12 paired in the back-and-forth direction of a vehicle body 3 on the body left side and two right arms 11 and 12 paired in the back-and-forth direction of the vehicle body 3 on the body right side.

In this embodiment, there are also provided two pairs of hydraulic shock absorbers. The first pair of hydraulic shock absorbers are formed by a hydraulic shock absorber 4 for the body left-side front wheel 7 and a hydraulic shock absorber 5 for the body left-side rear wheel 9. The second pair of hydraulic shock absorbers are formed by a hydraulic shock absorber 4 for the body right-side front wheel 8 and a hydraulic shock absorber 5 for the body right-side rear wheel 10.

That is, the hydraulic shock absorber 4 for the body left-side front wheel 7 is connected to one reserve tank 6 via a first oil hose 51 (first hydraulic oil passage 61). The hydraulic shock absorber 5 for the body left-side rear wheel 9 is also connected to the reserve tank 6 via a second oil hose 52 (second hydraulic oil passage 62).

In addition, the hydraulic shock absorber 4 for the body right-side front wheel 8 is connected to another reserve tank 6 via a first oil hose 51 (first hydraulic oil passage 61). The hydraulic shock absorber 5 for the body right-side rear wheel 10 is connected to the other reserve tank 6 via a second oil hose 52 (second hydraulic oil passage 62).

According to the embodiment shown in Fig. 12, a change in attitude of the vehicle body 3 is suppressed when pitching occurs in which the front and rear portions of the vehicle body 3 are displaced in the vertically opposite directions. For example, the whole amount of the hydraulic oil pushed out from the contracting body front-side hydraulic shock absorber flows into a third oil chamber 57 via the individual first hydraulic oil passage 61 or 62, a free piston 84 in the reserve tank 6 is pressed by the hydraulic oil to move toward a gas chamber 96. Therefore, unlike patent literature 2, it is possible to suppress a change in attitude of the vehicle body 3 by the hydraulic oil instantaneously flowing into the other hydraulic shock absorber without increasing the inclination of the vehicle body.

If the attitude of the vehicle body 3 rapidly changes, it is also expected that the hydraulic oil is sucked into the reserve tank 6 from the other hydraulic shock absorber side, and the oil pressure acts on the other hydraulic shock absorber in the contracting direction. In this case, it is possible to further suppress a change in attitude of the vehicle body 3. Note that after a lapse of time, the hydraulic oil flowing into the reserve tank 6 receives a gas reaction force, and is pushed out toward the other hydraulic shock absorber. When the hydraulic oil is pushed out toward the other hydraulic shock absorber, the hydraulic shock absorber expands. Since, however, the time required from the start to the end of a change in attitude of the vehicle body 3 is short, the change in attitude ends before the other hydraulic shock absorber expands, and thus there is no problem.

Consequently, according to the embodiment shown in Fig. 12, when the four-wheel vehicle pitches, it is possible to suppress a change in attitude of the vehicle body 3 by a simple structure.

### (Third Embodiment)

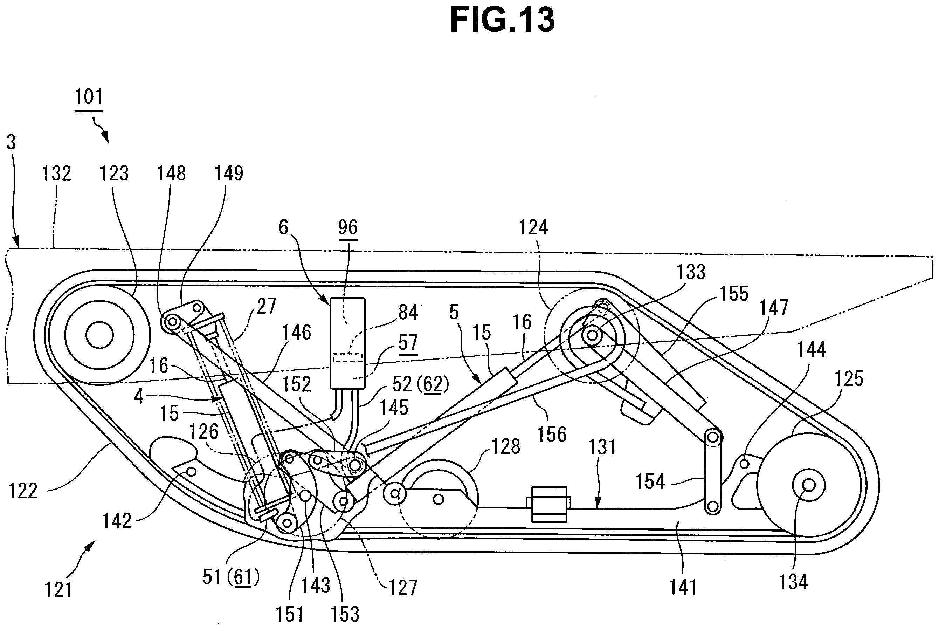

The hydraulic shock absorbing apparatus for the vehicle according to the present invention is applicable to the body rear-side suspension of a snowmobile, as shown in Fig. 13. The same reference numerals as those of the members described with reference to Figs. 1 to 12 denote the same or similar members in Fig. 13, and a detailed description thereof will appropriately be omitted. A hydraulic shock absorbing apparatus for a vehicle according to this embodiment corresponds to a hydraulic shock absorbing apparatus described in claim 10.

The vehicle according to this embodiment is a snowmobile 101 shown in Fig. 13. A driving device 121 shown in Fig. 13 is provided in the rear portion of a vehicle body 3 of the snowmobile 101. The driving device 121 has a structure for driving one driving track belt 122 to rotate. The driving device 121 according to this embodiment includes a plurality of wheels 123 to 125 and a plurality of guide pulleys 126 to 128 to which the track belt 122 is spliced, and a slide rail 131 arranged on the inner surface of the lower portion of the track belt 122. Among the plurality of wheels 123 to 125, the driving wheel 123 located at a position closest to the body front side (the left side in Fig. 13) is driven by an engine (not shown) to rotate. The driving wheel 123 and the upper guide wheel 124 and lower guide wheel 125 located on the body rear side are provided on each of the left and right sides of the vehicle body 3.

The driving wheel 123 is rotatably supported by a vehicle body frame 132 provided in the vehicle body 3 of the snowmobile 101 in a state in which the movement in the vertical, back-and-forth, and right-and-left directions is regulated. The upper guide wheel 124 is rotatably supported by the vehicle body frame 132 via an upper wheel shaft 133 extending in the right-and-left direction of the vehicle body 3 in a state in which the movement in the vertical, back-and-forth, and right-and-left directions is regulated.

The lower guide wheel 125 is rotatably supported by the rear end portion of the slide rail 131 (to be described later) via a lower wheel shaft 134 extending in the right-and-left direction of the vehicle body.

The plurality of guide pulleys 126 to 128 are respectively, rotatably supported by the slide rail 131 (to be described later).

The slide rail 131 guides the track belt 122 while pressing the track belt 122 against a snow surface. The slide rail 131 according to this embodiment is formed, in a ladder shape when viewed from above, by a left-and-right pair of side rails 141 (one of them is not shown), a plurality of shafts connecting the side rails 141 at a plurality of positions in the back-and-forth direction, and the like. The plurality of shafts are cross shafts 142 to 144, a lower arm shaft 145, and the lower wheel shaft 134. The front portion of the slide rail 131 is connected to the vehicle body frame 132 via a body front-side arm 146 to be movable in the vertical direction. The rear portion of the slide rail 131 is connected to the vehicle body frame 132 via a body rear-side arm 147 to be movable in the vertical direction. Since, therefore, part of the vehicle weight acts on the slide rail 131, the track belt 122 travels while supporting the vehicle weight by rotation.

The body front-side arm 146 and the body rear-side arm 147 are inclined in a state in which the body front side is higher than the body rear side when viewed from the side. Furthermore, the left-and-right pair of body front-side arms 146 and the left-and-right pair of body rear-side arms 147 are provided in the vehicle body. The front end portions of the left-and-right pair of body front-side arms 146 are respectively connected to an upper arm shaft 148 extending in the right-and-left direction, and is pivotably connected to the vehicle body frame 132 via the upper arm shaft 148. A bracket 149 is secured to the central portion of the upper arm shaft 148 in the axial direction, and the upper end portion of the body front-side hydraulic shock absorber 4 is pivotably connected to the central portion via the bracket 149.

The lower end portion of the body front-side hydraulic shock absorber 4 is pivotably connected to one end portion of a first link 151 pivotably supported by the central cross shaft 143. That is, the body front-side hydraulic shock absorber 4 is substantially provided between the vehicle body frame 132 and the central cross shaft 143 of the slide rail 131.

The body front-side hydraulic shock absorber 4 according to this embodiment is provided between the vehicle body frame 132 and the slide rail 131 in a state in which a cylinder main body 15 is located under the hydraulic shock absorber 4 and a piston rod 16 is located above the hydraulic shock absorber 4. Furthermore, a shock absorbing spring 27 is provided between the upper and lower end portions of the body front-side hydraulic shock absorber 4.

The lower arm shaft 145 extending in the right-and-left direction is integrally formed in the rear end portion of the body front-side arm 146. The rear end portion of the body front-side arm 146 is pivotably connected to the side rail 141 via the lower arm shaft 145. A second link 152 is secured to the central portion of the lower arm shaft 145 in the axial direction. A third link 153 is pivotably connected to the second link 152. The central portion of the lower arm shaft 145 in the axial direction is connected to the lower end portion of a body rear-side hydraulic shock absorber 5 (to be described later) via the third link 153. The lower end portion of the hydraulic shock absorber 5 is pivotably connected to the third link 153. The other end portion of the above-described first link 151 is pivotably connected to the third link 153.

The front end portions of the left-and-right pair of body rear-side arms 147 are respectively, pivotably connected to the above-described upper wheel shaft 133. The rear end portions of the body rear-side arms 147 are respectively, pivotably connected to the side rails 141 via fourth links 154. A support bracket 155 extending upward is provided in each of the body rear-side arms 147. The upper end portion of the body rear-side hydraulic shock absorber 5 is pivotably connected to the upper end portion of the support bracket 155.

Therefore, the body rear-side hydraulic shock absorber 5 is substantially provided between the vehicle body frame 132 and the lower arm shaft 145 of the slide rail 131. The lower arm shaft 145 is located on the body rear side of the above-described central cross shaft 143. The pair of hydraulic shock absorbers 4 and 5 according to this embodiment are respectively suspended between the vehicle body frame 132 and two positions of the slide rail 131 in the back-and-forth direction.

A torsion spring 156 is arranged near the body rear-side hydraulic shock absorber 5. The torsion spring 156 is disposed between the vehicle body frame 132 and the left and right side rails 141, and biases the slide rail 131 in a direction away from the vehicle body frame 132.

The first oil chamber (not shown) of the body front-side hydraulic shock absorber 4 is connected to a third oil chamber 57 of a reserve tank 6 via a first oil hose 51. The first oil chamber (not shown) of the body rear-side hydraulic shock absorber 5 is connected to the third oil chamber 57 of the reserve tank 6 via a second oil hose 52. The hydraulic shock absorbers 4 and 5 and the reserve tank 6 are the same as those used when adopting the first embodiment. The reserve tank 6 according to this embodiment is arranged at a position surrounded by the track belt 122, and supported by the vehicle body frame 132 via a bracket (not shown).

When the snowmobile 101 according to this embodiment travels on an uneven snow surface, the body front-side arm 146 swings about the upper arm shaft 148 and the body rear-side arm 147 swings about the upper wheel shaft 133. The pair of hydraulic shock absorbers 4 and 5 operate in the same direction or opposite directions along with the swing. If the snowmobile 101 pitches, the body front-side hydraulic shock absorber 4 and the body rear-side hydraulic shock absorber 5 operate in the opposite directions, thereby suppressing a change in attitude of the vehicle body by a simple structure, similarly to the embodiment shown in Fig. 12.

### (Fourth Embodiment)

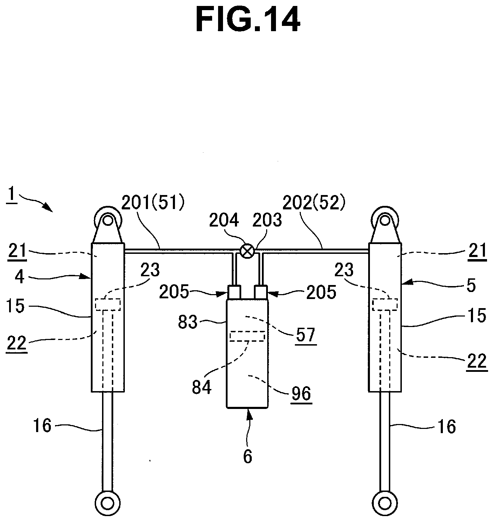

The hydraulic shock absorbing apparatus for the vehicle according to the present invention can be arranged, as shown in Figs. 14 to 17. The same reference numerals as those of the members described with reference to Figs. 1 to 11 denote the same or similar members in Figs. 14 to 17, and a detailed description thereof will be omitted. A hydraulic shock absorbing apparatus for a vehicle according to this embodiment corresponds to a hydraulic shock absorbing apparatus described in claims 2, 3, 11, and 12.

A hydraulic shock absorbing apparatus 1 shown in Fig. 14 is mounted on a four-wheel-drive vehicle (not shown) which runs a rocky tract or a bad road, or a snowmobile 101 shown in Fig. 11 or 13. Fig. 14 shows the hydraulic shock absorbing apparatus 1 in a form in which it is mounted on the snowmobile 101. That is, cylinder main bodies 15 of hydraulic shock absorbers 4 and 5 are located at upper positions and piston rods 16 project downward from the cylinder main bodies 15.

A first oil chamber 21 formed in the body left-side hydraulic shock absorber 4 communicates with a third oil chamber 57 of a reserve tank 6 by a first hydraulic oil passage 201. A first oil chamber 21 formed in the body right-side hydraulic shock absorber 5 communicates with the third oil chamber 57 of the reserve tank 6 by a second hydraulic oil passage 202. Similarly to a case in which the first or second embodiment is adopted, the first and second hydraulic oil passages 201 and 202 can be formed by first and second oil hoses 51 and 52 and splicing fittings 55 and 59, respectively.

The hydraulic shock absorbing apparatus 1 according to this embodiment includes a communication path 203 for making the first hydraulic oil passage 201 and the second hydraulic oil passage 202 communicate with each other, and an on-off valve 204 for opening/closing the communication path 203. The communication path 203 makes the intermediate portion of the first hydraulic oil passage 201 and that of the second hydraulic oil passage 202 communicate with each other.

In a portion of each of the first hydraulic oil passage 201 and the second hydraulic oil passage 202, which is closer to the third oil chamber 57 of the reserve tank 6 than to the communication path 203, a base valve 205 is provided. The base valve 205 is formed by a variable throttle, and will be described in detail later.

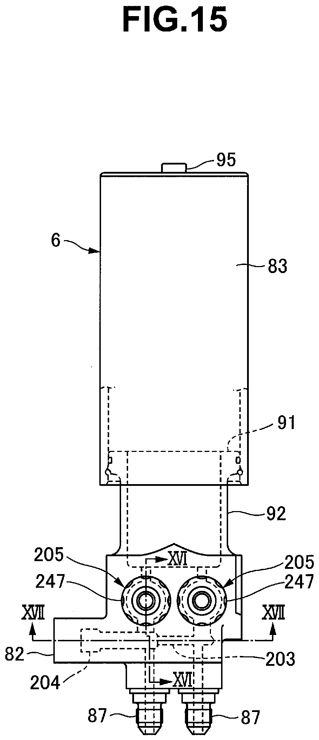

The communication path 203, the on-off valve 204, and the base valves 205 are provided in a base member 82 of the reserve tank 6, as shown in Fig. 15.

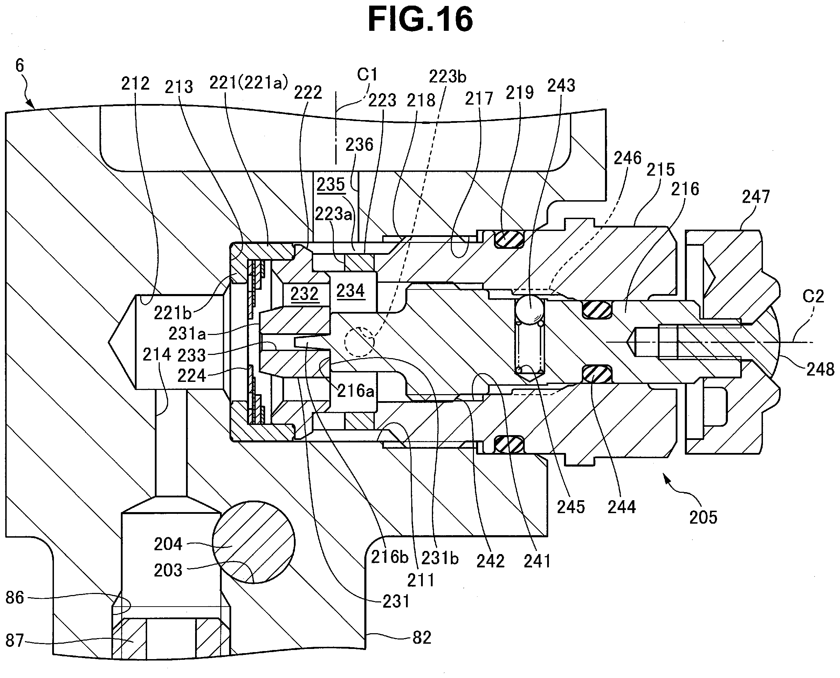

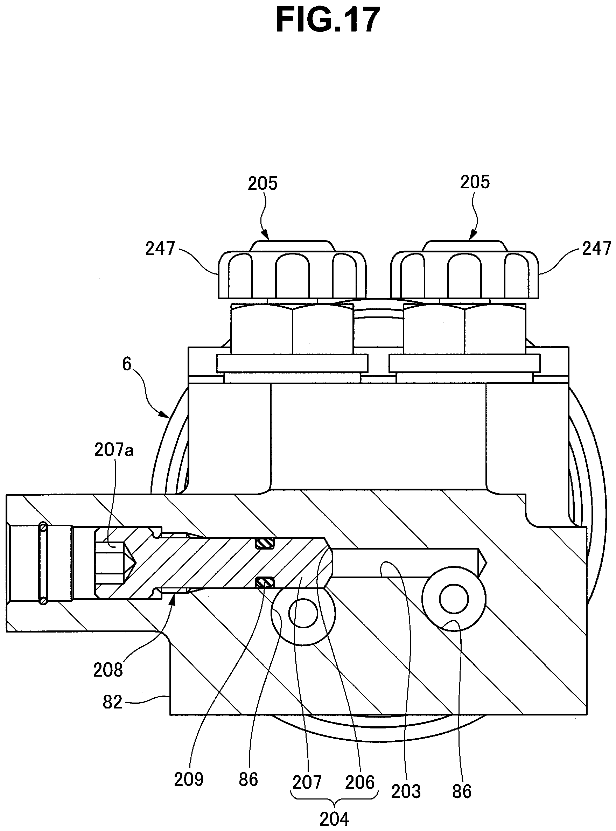

The communication path 203 is provided near two nipples 87 mounted on the base member 82. That is, the communication path 203 is connected to a screw hole 86 in which the nipple 87 located in the lower left portion in Fig. 16 is screwed, as shown in Fig. 16, and makes the two screw holes 86 for the nipples communicate with each other, as shown in Fig. 17. One end of the communication path 203 extends through the base member 82 toward one side, and is open to one side surface of the base member 82.

The on-off valve 204 for opening/closing the communication path 203 is formed by a valve seat 206 including a tapered surface provided in the middle of the communication path 203, and a columnar valve body 207 which comes into contact with and moves apart from the valve seat 206. The valve body 207 is threadably engaged with the base member 82 in a threadably engaging portion 208. A distal end portion (the right end portion in Fig. 17) of the valve body 207 is formed in a shape in which it is fitted and seated on the valve seat 206. A hexagonal hole 207a with which a tool (not shown) is engaged is formed in the other end portion of the valve body 207. An O-ring 209 for sealing a portion with respect to the base member 82 is mounted on the intermediate portion of the valve body 207.

The on-off valve 204 is rotated in a direction in which the valve body 207 is screwed in the threadably engaging portion 208, and the distal end portion of the valve body 207 is closed by abutting against the valve seat 206. The on-off valve 204 is opened by rotating the valve body 207 in a direction in which the threadably engaging portion 208 is loosened.

As shown in Fig. 16, the base valve 205 is mounted in a valve hole 211 of the base member 82. The valve hole 211 is a non-through hole open to one side portion of the base member 82, and is formed in a shape extending in a direction orthogonal to an axis C1 of a cylinder 83 of the reserve tank 6. A concave portion 212 having a diameter smaller than that on the opening side is formed in the bottom of the valve hole 211. The boundary between the concave portion 212 and the opening side is formed by a step 213. The concave portion 212 is connected to the screw hole 86 for the nipple by a communicating hole 214.

The base valve 205 according to this embodiment includes a cylindrical valve housing 215 inserted into the valve hole 211, and a valve body 216 threadably engaged with the interior of the hollow portion of the valve housing 215.

In the outer circumferential portion of the valve housing 215, a male screw 218 threadably engaged with a female screw 217 formed on the inner wall of the valve hole 211 is formed, and an O-ring 219 for sealing a portion with respect to the hole wall surface of the valve hole 211 is mounted. The valve housing 215 is screwed in the valve hole 211 and fixed in a state in which a plurality of members are sandwiched between the valve housing 215 and the step 213 of the valve hole 211.

The plurality of members located between the valve housing 215 and the step 213 are a first cylindrical member 221 fitted in the step 213, a disk-shaped valve seat member 222 fitted in a cylinder 221a of the first cylindrical member 221, and a second cylindrical member 223 sandwiched between the outer circumferential portion of the valve seat member 222 and the valve housing 215.

The first cylindrical member 221 is formed by the cylinder 221a fitted in the valve hole 211, and an inner flange 221b along the step 213. A plurality of ring-shaped plates 224 having different inner diameters are fitted in the first cylindrical member 221 to be movable in the axial direction. These plates 224 are arrayed so that the plate 224 having a smaller inner diameter is located closer to the bottom of the valve hole 211.

The valve seat member 222 serves as the valve seat of the base valve 205. The valve seat member 222 has a plurality of function units. The plurality of function units include a valve seat 231 located in the axial portion of the disk-shaped valve seat member 222, and a bypass passage 232 formed from a plurality of through holes provided in the periphery of the valve seat 231. The valve seat 231 includes a first seat surface 231a facing the bottom of the valve hole 211, and a second seat surface 231b directed to the opening side of the valve hole 211. Furthermore, the through hole 233 open to the first seat surface 231a and the second seat surface 231b is formed in the central portion of the valve seat 231.

Among the above-described plurality of ring-shaped plates 224, the plate 224 having the smallest inner diameter has an inner circumferential portion facing the first seat surface 231a. When the hydraulic oil flows from the interior of the concave portion 212 of the valve hole 211 into the bypass passage 232 of the valve seat member 222, this ring-shaped plate 224 is pressed by the hydraulic oil to abut against the first seat surface 231a, thereby regulating the flow of the hydraulic oil. Furthermore, when the hydraulic oil flows from the bypass passage 232 toward the interior of the concave portion 212, this ring-shaped plate 224 is pressed by the hydraulic oil to move away from the first seat surface 231a, thereby permitting the flow of the hydraulic oil. That is, the ring-shaped plate 224 functions as a check valve. One end portion of a through hole 233 open to the first seat surface 231a is kept in an open state even in a state in which the ring-shaped plate 224 is in tight contact with the first seat surface 231a. That is, one end portion of the through hole 233 is always open to the bottom portion of the valve hole 211.

The second cylindrical member 223 is formed in a cylindrical shape. One end of the above-described bypass passage 232 is open to a hydraulic oil chamber 234 formed inside the second cylindrical member 223.

A plurality of notches 223a and a through hole 223b are formed in the second cylindrical member 223 to pass the hydraulic oil in the radial direction. The outer diameter of the second cylindrical member 223 is smaller than the inner diameter of the valve hole 211. Therefore, an annular hydraulic oil passage 235 is formed between the second cylindrical member 223 and the hole wall surface of the valve hole 211. A communicating hole 236 for making the hydraulic oil passage 235 communicate with the third oil chamber 57 of the reserve tank 6 is open to the hole wall surface of the valve hole 211 on which the hydraulic oil passage 235 is formed. Therefore, the third oil chamber 57 communicates with the hydraulic oil chamber 234 in the second cylindrical member 223 via the communicating hole 236, the annular hydraulic oil passage 235, the notches 223a, and the through hole 223b.

The valve body 216 is formed in a columnar shape. One end portion of the valve body 216 on the bottom side of the valve hole 211 is formed by a flat end face 216a contacting the second seat surface 231b of the valve seat 231, and a needle 216b projecting from the end face 216a. The needle 216b is formed in a conical shape tapering toward the distal end, and inserted into the through hole 233 of the above-described valve seat 231.

A male screw 242 threadably engaged with a female screw 241 of the valve housing 215, a ball 243, and an O-ring 244 are provided in the outer circumferential portion of the valve body 216. The ball 243 is pressed by a compression coil spring 245 accommodated in the valve body 216, and is engaged with concave grooves 246 of the valve housing 215. The concave grooves 246 are formed to have serrations in the inner circumferential portion of the valve housing 215. That is, each concave groove 246 is formed in a shape extending in the axial direction of the valve housing 215, and many concave grooves 246 are formed to be arrayed in the circumferential direction of the inner circumferential portion of the valve housing 215. If the valve body 216 rotates about an axis C2, the ball 243 crosses over a projection portion between the concave grooves 246, thereby providing moderation to rotation.

The O-ring 244 seals a portion between the valve body 216 and the inner circumferential portion of the valve housing 215.

An operation handle 247 is mounted on the other end portion of the valve body 216 by a mounting screw 248. When an operator (not shown) rotates the handle 247, the valve body 216 moves along the axis C2 while rotating in the valve housing 215 by the action of the screw. The valve body 216 advances toward the valve seat 231, and the end face 216a of one end portion abuts against the second seat surface 231b, thereby setting the base valve 205 in a full close state.

If the valve body 216 retreats from the full close state, a gap is formed between the end face 216a and the second seat surface 231b, and the needle 216b is pulled out from the through hole 233 of the valve seat 231 to open the base valve 205, thereby making the through hole 233 communicate with the hydraulic oil chamber 234 in the second cylindrical member 223. The thus opened base valve 205 substantially functions as a variable throttle.

The valve body 216 can retreat until the male screw 242 or the ball 243 abuts against the valve housing 215 to regulate rotation. In the state in which the valve body 216 retreats in this way, the base valve 205 is set in the full open state. The aperture ratio of the valve body 216 can be readily set based on the number of times the ball 243 crosses over the projection portion between the concave grooves 246. The number of times can be readily counted since the resistance when rotating the handle 247 increases/decreases.

In the state in which the base valve 205 is open, the first and second hydraulic oil passage 201 and 202 and the third oil chamber 57 communicate with each other via the throttle formed from the base valve 205. Thus, when the hydraulic oil flows into or out from the third oil chamber 57, a damping force is generated.

The hydraulic shock absorbing apparatus 1 according to this embodiment is used in the state in which the on-off valve 204 is open when a four-wheel-drive vehicle runs a rocky tract or a bad road or a snowmobile runs on fresh snow. If the on-off valve 204 is opened, the first hydraulic oil passage 201 and the second hydraulic oil passage 202 communicate with each other via the communication path 203 and the on-off valve 204, thereby allowing the hydraulic oil to smoothly flow between the body left-side hydraulic shock absorber 4 and the body right-side hydraulic shock absorber 5. That is, the hydraulic oil pushed when one of the hydraulic shock absorbers contracts flows into the other hydraulic shock absorber, and the other hydraulic shock absorber resultantly expands. Therefore, for example, in sport called rock crawling, when a four-wheel-drive vehicle runs over a rocky tract in which large rocks are irregularly arrayed, if one of the right and left wheels of the vehicle body 3 runs on a large rock, the vehicle body is to largely roll. According to this embodiment, however, if the hydraulic shock absorber on the side on which the wheel runs on the large rock contracts, the other hydraulic shock absorber instantaneously expands to suppress rolling.

When the snowmobile runs on fresh snow, if only the handle bar is rotated, the outer ski in the turning direction gets covered with fresh snow by the centrifugal force, and it may be impossible to correctly change the running direction. In this case, first, the occupant shifts the weight by leaning inward in the turning direction. Then, the occupant performs a so-called counter steering operation so that the vehicle body inclines inward in the turning direction and the outer ski in the turning direction floats. In the state in which the on-off valve 204 is open, the vehicle body can be readily inclined inward in the turning direction. Therefore, even in a status in which the snowmobile suddenly turns on fresh snow, it can readily run.

In this embodiment, the base valve 205 formed from a throttle is provided in a portion of each of the first and second hydraulic oil passages 201 and 202, which is closer to the third oil chamber 57 than to the communication path 203. The flow rate of the hydraulic oil flowing into or out between the third oil chamber 57 and each of the first and second hydraulic oil passages 201 and 202 is regulated by the base valve 205. That is, according to this embodiment, in the state in which the on-off valve 204 is closed, the flow rate of the hydraulic oil flowing into the third oil chamber 57 or flowing out from the third oil chamber 57 can be readily adjusted. Therefore, according to this embodiment, it is possible to provide the hydraulic shock absorbing apparatus for the vehicle capable of adjusting the responsiveness and the like.

### (Fifth Embodiment)

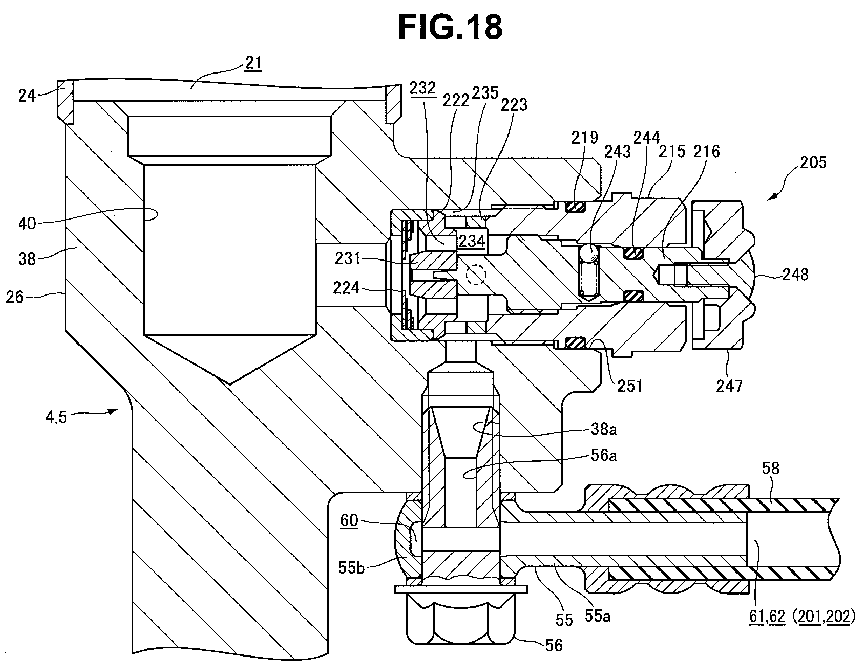

A base valve can be provided in a hydraulic shock absorber, as shown in Fig. 18. The same reference numerals as those of the members described with reference to Figs. 1 to 17 denote the same or similar members in Fig. 18, and a detailed description thereof will be omitted. A hydraulic shock absorbing apparatus for a vehicle according to this embodiment corresponds to a hydraulic shock absorbing apparatus described in claims 4 and 13.

A hydraulic shock absorber 4 or 5 shown in Fig. 18 is mounted on an automobile or a snowmobile 101 shown in Fig. 11 or 13.

A base valve 205 shown in Fig. 18 is mounted in a valve hole 251 formed in a lid member 26 of the hydraulic shock absorber 4 or 5. That is, the base valve 205 is provided in each of the pair of hydraulic shock absorbers 4 and 5. The valve hole 251 is open to one side of the lid member 26 and is connected to a concave portion 40 of the lid member 26. One end of a screw hole 38a for mounting a shock absorber-side splicing fitting 55 is open to the hole wall surface of the valve hole 251 corresponding to an annular hydraulic oil passage 235 of the base valve 205. Therefore, when the base valve 205 is opened, a first oil chamber 21 of the hydraulic shock absorber 4 or 5 and the first or second hydraulic oil passages 61, 62, 201, or 202 are connected via a throttle formed from the base valve 205. The throttle mainly functions to allow a ring-shaped plate 224 to open/close a bypass passage 232 when the hydraulic shock absorber 4 or 5 contracts.

Therefore, according to this embodiment, the pressure of the hydraulic oil in the hydraulic shock absorber 4 or 5 directly acts on the base valve 205. That is, as compared with a case in which an oil hose exists between the hydraulic shock absorber 4 or 5 and the base valve, the pressure of the hydraulic oil in the hydraulic shock absorber 4 or 5 is transferred to the base valve 205 without being decreased midway. Thus, it is possible to provide a hydraulic shock absorbing apparatus for a vehicle in which a damping force is efficiently generated in the base valve 205 and the inclination of a vehicle body caused by rolling or pitching can be suppress more reliably.

Each of the above-described embodiments has explained an example in which the first oil chamber 21 of each of the hydraulic shock absorbers 4 and 5 is connected to the third oil chamber 57. The present invention, however, is not limited to this. An arrangement in which the second oil chamber 22 is connected to the third oil chamber 57 can be adopted.

### Explanation of the Reference Numerals and Signs

1... hydraulic shock absorbing apparatus, 2...automobile, 3...vehicle body, 4, 5...hydraulic shock absorber, 6...reserve tank, 7, 8...front wheel, 9, 10...rear wheel, 11...left arm, 12...right arm, 15...cylinder main body, 16...piston rod, 21...first oil chamber, 22...second oil chamber, 23...piston, 51...first oil hose, 52...second oil hose, 57...third oil chamber, 76...first leaf spring, 77...second leaf spring, 84...free piston, 96...gas chamber, 101...snowmobile, 104, 105...steering ski, 122...track belt, 132...vehicle body frame, 146...body front-side arm, 147...body rear-side arm, 201...first hydraulic oil passage, 202...second hydraulic oil passage.

## Claims

1. A hydraulic shock absorbing apparatus for a vehicle, comprising:
a first traveling member and a second traveling member paired and provided in a vehicle body, and configured to travel while supporting a vehicle weight;
a first connecting member configured to connect the first traveling member to be movable in a vertical direction with respect to the vehicle body;
a second connecting member configured to connect the second traveling member to be movable in the vertical direction with respect to the vehicle body;
a pair of hydraulic shock absorbers respectively suspended between the first connecting member and the vehicle body, and between the second connecting member and the vehicle body, and the pair of hydraulic shock absorbers each including one end portion formed by a cylinder main body partitioned into a first oil chamber and a second oil chamber by a piston, and including the other end portion formed by a piston rod that includes the piston, and the first oil chamber and the second oil chamber communicating with each other by a throttle; and
a reserve tank including a third oil chamber connected to, via a first hydraulic oil passage, one of the pair of hydraulic shock absorbers that is provided between the first connecting member and the vehicle body, and connected to the other hydraulic shock absorber via a second hydraulic oil passage, and including a gas chamber partitioned from the third oil chamber by a free piston forming a part of a wall of the third oil chamber,
wherein each of the first hydraulic oil passage and the second hydraulic oil passage is individually connected to the third oil chamber, and one of the first oil chamber and the second oil chamber of each hydraulic shock absorber communicates with the third oil chamber.

2. The hydraulic shock absorbing apparatus for the vehicle according to claim 1, further comprising:
a communication path configured to make the first hydraulic oil passage and the second hydraulic oil passage communicate with each other; and
an on-off valve configured to open and to close the communication path.

3. The hydraulic shock absorbing apparatus for the vehicle according to claim 2, wherein a base valve formed from a throttle is provided in respective portions of the first hydraulic oil passage and the second hydraulic oil passage, the respective portions being closer to the third oil chamber than to the communication path.

4. The hydraulic shock absorbing apparatus for the vehicle according to claim 1, wherein
each of the first hydraulic oil passage and the second hydraulic oil passage includes a base valve formed from a throttle, and
the base valve is provided in each of the pair of hydraulic shock absorbers.

5. The hydraulic shock absorbing apparatus for the vehicle according to any one of claims 1 to 4, wherein
the first connecting member and the second connecting member are paired in a right-and-left direction of the vehicle body, and
the pair of hydraulic shock absorbers is formed by two hydraulic shock absorbers respectively provided between the first connecting member and the vehicle body, and between the second connecting member and the vehicle body.

6. The hydraulic shock absorbing apparatus for the vehicle according to claim 5, wherein
a target vehicle is a four-wheel vehicle that includes a left-and-right pair of front wheels and a left-and-right pair of rear wheels,
the first traveling member and the second traveling member are at least one of a pair of traveling members formed from the left-and-right pair of front wheels and a pair of traveling members formed from the left-and-right pair of rear wheels, and
the pair of hydraulic shock absorbers are formed by at least one of a pair of hydraulic shock absorbers provided between the vehicle body and the first connecting member and second connecting member located on a body front side, and a pair of hydraulic shock absorbers provided between the vehicle body and the first connecting member and second connecting member located on a body rear side.

7. The hydraulic shock absorbing apparatus for the vehicle according to claim 5, wherein
a target vehicle is a four-wheel vehicle that includes a left-and-right pair of front wheels and a left-and-right pair of rear wheels,
the first traveling member and the second traveling member comprise a pair of traveling members formed from a body left-side front wheel and a body right-side rear wheel, and a pair of traveling members formed from a body right-side front wheel and a body left-side rear wheel, and
a hydraulic shock absorber for the body left-side front wheel and a hydraulic shock absorber for the body right-side rear wheel form the pair of hydraulic shock absorbers, and a hydraulic shock absorber for the body right-side front wheel and a hydraulic shock absorber for the body left-side rear wheel form the pair of hydraulic shock absorbers.

8. The hydraulic shock absorbing apparatus for the vehicle according to claim 5, wherein
a target vehicle is a snowmobile that includes a body left-side steering ski and a body right-side steering ski,
the first traveling member comprises the body left-side steering ski,
the second traveling member comprises the body right-side steering ski, and
the pair of hydraulic shock absorbers are formed by a hydraulic shock absorber provided between the vehicle body and the first connecting member located on the body left side, and a hydraulic shock absorber provided between the vehicle body and the second connecting member located on the body right side.

9. The hydraulic shock absorbing apparatus for the vehicle according to any one of claims 1 to 4, wherein
a target vehicle is a four-wheel vehicle that includes a left-and-right pair of front wheels and a left-and-right pair of rear wheels,
the first traveling member and the second traveling member are a pair of traveling members formed from a body left-side front wheel and a body left-side rear wheel, and a pair of traveling members formed from a body right-side front wheel and a body right-side rear wheel, and
a hydraulic shock absorber for the body left-side front wheel and a hydraulic shock absorber for the body left-side rear wheel form the pair of hydraulic shock absorbers, and a hydraulic shock absorber for the body right-side front wheel and a hydraulic shock absorber for the body right-side rear wheel form the pair of hydraulic shock absorbers.

10. A hydraulic shock absorbing apparatus for a vehicle, comprising:
a driving track belt provided in a vehicle body and configured to travel while supporting a vehicle weight;
a slide rail arranged on an inner surface of the track belt;
a body front-side arm and a body rear-side arm configured to connect the slide rail to be movable in a vertical direction with respect to the vehicle body;
a pair of hydraulic shock absorbers respectively suspended between the vehicle body and two positions of the slide rail in a back-and-forth direction, and the pair of hydraulic shock absorbers each including one end portion formed by a cylinder main body partitioned into a first oil chamber and a second oil chamber by a piston, and including the other end portion formed by a piston rod that includes the piston, and the first oil chamber and the second oil chamber communicating with each other by a throttle; and
a reserve tank including a third oil chamber connected to one of the pair of hydraulic shock absorbers via a first hydraulic oil passage, and connected to the other hydraulic shock absorber via a second hydraulic oil passage, and including a gas chamber partitioned from the third oil chamber by a free piston forming a part of a wall of the third oil chamber,
wherein each of the first hydraulic oil passage and the second hydraulic oil passage is individually connected to the third oil chamber, and one of the first oil chamber and the second oil chamber of each hydraulic shock absorber communicates with the third oil chamber.

11. The hydraulic shock absorbing apparatus for the vehicle according to claim 10, further comprising:
a communication path configured to make the first hydraulic oil passage and the second hydraulic oil passage communicate with each other; and
an on-off valve configured to open and to close the communication path.

12. The hydraulic shock absorbing apparatus for the vehicle according to claim 11, wherein a base valve formed from a throttle is provided in respective portions of the first hydraulic oil passage and the second hydraulic oil passage, is the respective portions being closer to the third oil chamber than to the communication path.

13. The hydraulic shock absorbing apparatus for the vehicle according to claim 10, wherein
each of the first hydraulic oil passage and the second hydraulic oil passage includes a base valve formed from a throttle, and
the base valve is provided in each of the pair of hydraulic shock absorbers.
